# EUROPÄISCHE PATENTSCHRIFT

(11) **EP 1 752 666 B1**
(45) Veröffentlichungstag und Bekanntmachung des Hinweises auf die Patenterteilung: **10.03.2010**
(21) Anmeldenummer: 06116436.4
(22) Anmeldetag: 30.06.2006
(51) Int. Cl.: F16B 2/24, F16B 12/26, F16B 21/18

(54) **Lager- und Halteeinrichtung zur Aufnahme und Lagerung eines Lagerbolzens einer Lagerwelle**
Bearing and holding device for receiving and holding a bearing bolt of a bearing shaft
Ensemble de palier et dispositif de rétention pour recevoir et retenue un boulon à coussinet d'un arbre à coussinet

(30) Priorität: 10.08.2005 DE 202005012701 U
(43) Veröffentlichungstag der Anmeldung: 14.02.2007
(73) Patentinhaber: Hettich Franke GmbH & Co. KG, 72336 Balingen-Weilstetten (DE)
(72) Erfinder: DINSER, Torsten, 72336, Balingen (DE)
(74) Vertreter: Dantz, Jan Henning

(56) Entgegenhaltungen:
- EP-A- 0 936 359
- DE-U1- 20 308 231

## Beschreibung

Die vorliegende Erfindung betrifft eine Lager- und Halteeinrichtung zur Aufnahme und Lagerung eines Lagerbolzens einer Lagerwelle, wobei die Einrichtung eine ortsfest montierbare Lagerlasche und einen Lagerkörper mit einer etwa halbkreisförmigen Lagerschale und mit der Lagerschale gegenüberliegenden und einen Lagerbolzen in der Lagerschale haltenden Lagerabschnitten aufweist und der Lagerbolzen radial in den Lagerkörper einklipsbar ist.

Eine Lager- und Halteeinrichtung der gattungsgemäßen Art ist beispielsweise aus der DE 203 08 231 U1 bekannt.

Bei der bekannten Lager- und Halteeinrichtung bestehen die den Lagerbolzen in der Lagerschale sichernden Lagerabschnitte aus zwei sich in Richtung der Lagerschale erstreckenden und etwa V-förmig verlaufenden Stegen, die beim Einführen eines Lagerbolzens seitlich ausweichen und nach dem Einklipsen des Lagerbolzens in die Lagerschale wieder zurückfedern und dann mit ihren freien Enden den Lagerbolzen radial fixieren.

Eine derartige Konstruktion hat sich grundsätzlich bewährt, es ist lediglich etwas schwierig, eine Demontage dieser Lager- und Halteeinrichtung durchzuführen.

Der vorliegenden Erfindung liegt insoweit die Aufgabe zugrunde, eine Lager- und Halteeinrichtung der gattungsgemäßen Art so zu gestalten, dass sowohl die Montage wie auch eine gegebenenfalls erforderliche Demontage eines Lagerbolzens einfach und problemlos durchführbar ist.

Diese Aufgabe wird erfindungsgemäß dadurch gelöst, dass die den Lagerbolzen haltenden Lagerabschnitte bei eingeklipstem Lagerbolzen entgegen der Wirkung von in Aufspreizrichtung gerichteten Federkräften in ihrer Halteposition fixiert sind, wobei die Lagerlasche und der Lagerkörper als separate Bauteile ausgebildet sind und der Lagerkörper aus einem federelastischen Kunststoff gefertigt und als ein im nicht montierten Zustand im Wesentlichen V-förmig ausgebildeter Bügel vorgeformt ist, der in einen Einschnitt der Lagerlasche einschiebbar und dabei bezüglich seiner beiden Seitenschenkel zu einer annähernd U-förmigen Form zusammendrückbar ist, und dass der Lagerkörper sowohl in einer Vormontageposition, innerhalb der ein Lagerbolzen radial in den Lagerkörper einführbar ist, wie auch in einer endgültigen Montageposition, innerhalb derer der Lagerbolzen radial gesichert ist, gegenüber der Lagerlasche verrastbar oder anderweitig gegen unbeabsichtigtes Verschieben gesichert ist.

Eine derartige Konstruktion bietet den Vorteil, dass nach Aufhebung der Fixierung der Halteposition die den Lagerbolzen sichernden Lagerabschnitte auseinander gespreizt werden derart, dass anschließend der Lagerbolzen entgegen seiner radialen Einklipsrichtung auch radial wieder aus dem Lagerkörper herausgenommen werden kann. Insoweit ist nicht nur die Montage, sondern auch eine eventuell erforderlich werdende Demontage relativ einfach durchführbar, ohne die Sicherheit der montierten Position des Lagerbolzens zu gefährden.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figuren 1 bis 3: jeweils eine Vorder- und eine Seitenansicht einer erfindungsgemäßen Lager- und Haltevorrichtung und einen hiervon aufzunehmenden Lagerbolzen in verschiedenen Montagestellungen
- Figur 4: eine gegenüber den Figuren 1 bis 3 vergrößerte Darstellung einer Lager- und Halteeinrichtung
- Figur 5: eine im wesentlichen der Figur 4 entsprechende Ansicht der Lager- und Haltevorrichtung mit einem in einer Vormontageposition befindlichen Lagerkörper
- Figur 6: eine perspektivische Darstellung der Lager- und Halteeinrichtung mit vormontiertem Lagerbolzen
- Figur 7: eine Schnittdarstellung eines Lagerkörpers für eine Lager- und Halteeinrichtung nach einem von den Figuren 1 bis 6 abweichenden Ausführungsbeispiel
- Figuren 8 bis 10: jeweils in verschiedenen Montagepositionen gezeigte Vorder- und Seitenansichten einer erfindungsgemäßen Lager- und Halteeinrichtung mit darin aufzunehmendem Lager- bolzen
- Figur 11: eine perspektivische Darstellung der Lager- und Halteeinrichtung gemäß den Figuren 8 bis 10 mit in Vormontageposition befindlichem Lagerbolzen
- Figuren 12 bis 14: verschiedene Ansichten der Lager und Halteeinrichtung nach den Figuren 8 bis 11 in verschiedenen Montagepositionen eines Lagerkörpers
- Figuren 15a bis 15c: verschiedene Ansichten und eine Perspektivdarstellung des Lagerkörpers gemäß den Figuren 12 bis 14
- Figuren 16a bis 16c: verschiedene Ansichten und eine Perspektivdarstellung einer Lager- und Halteeinrichtung nach einem weiteren Ausführungsbeispiel der Erfindung
- Figur 17: eine Perspektivdarstellung einer Lager- und Halteeinrichtung gemäß Figur 16 und einem in einer Vormontageposition befindlichen Lagerbolzen
- Figur 18: eine der Figur 17 entsprechende Perspektivdarstellung nach dem Einsetzen des Lagerbolzens in die Lager- und Halteeinrichtung
- Figur 19: einen Schnitt durch den im Lagerkörper der Lager- und Halteeinrichtung gemäß Figur 18 fixierten Lagerbolzen

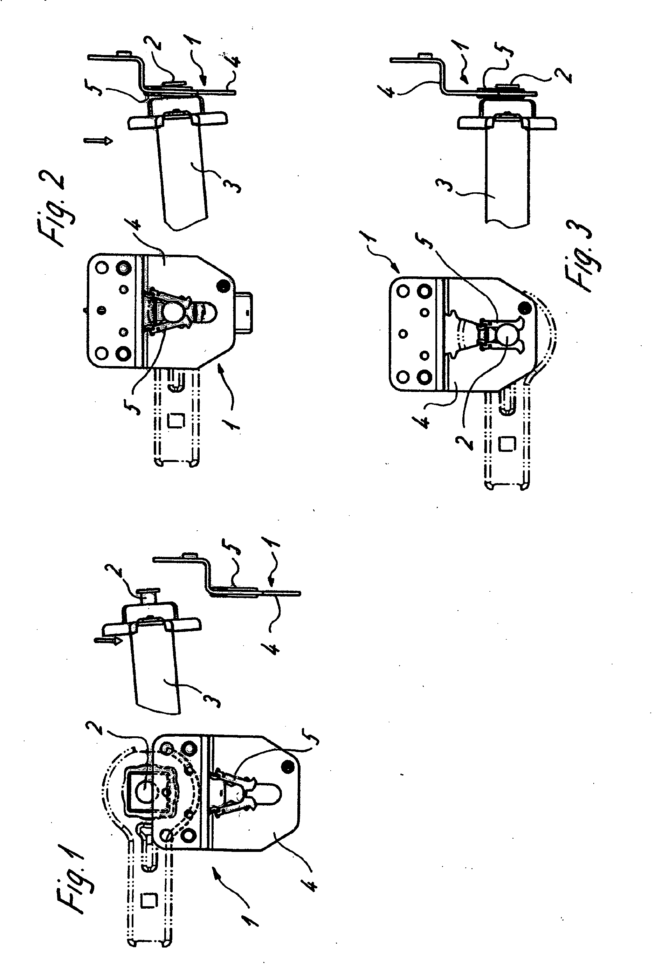

In den Figuren 1 bis 6 ist mit dem Bezugszeichen 1 jeweils eine Lager- und Halteeinrichtung bezeichnet, welche zur Aufnahme eines Lagerbolzens 2 einer beispielsweise nicht weiter bezeichneten Lagerwelle 3 bestimmt ist.

Die Lager- und Halteeinrichtung 1 umfasst in an sich bekannter Weise eine ortsfest montierbare Lagerlasche 4 und einen Lagerkörper 5.

Die Lagerlasche 4 weist etwa eine Z-winkelförmige Ausgestaltung auf.

Die Lagerlasche 4 ist bevorzugt aus Metall hergestellt, um große Belastungen aufnehmen zu können, natürlich ist auch die Möglichkeit gegeben, die Lagerlasche 4 aus einem entsprechend belastbaren Kunststoff herzustellen.

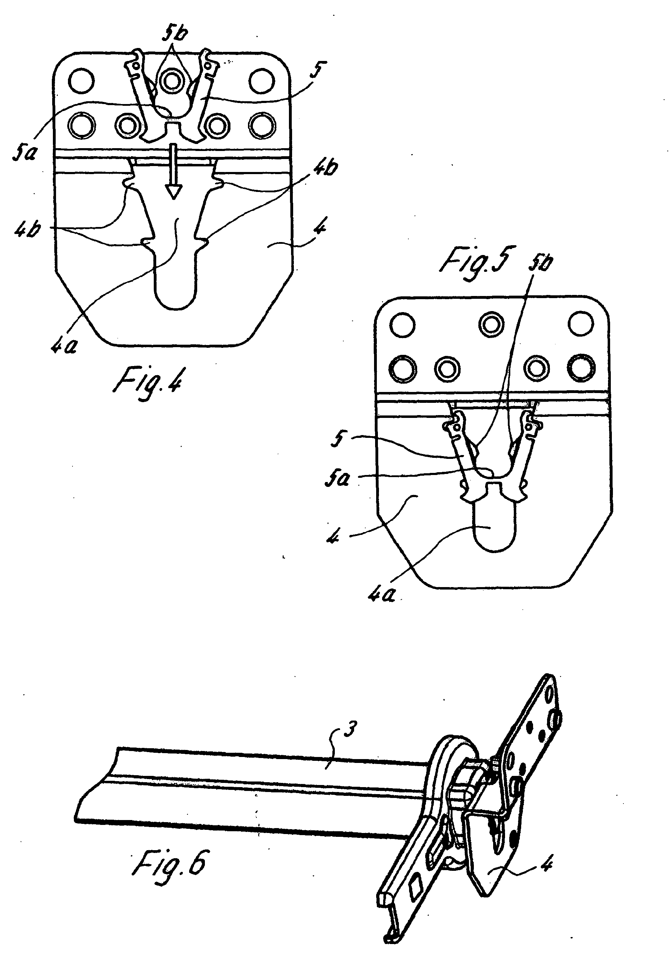

Der Lagerkörper 5 ist aus einem flexiblen Kunststoff hergestellt und weist eine etwa oder annähernd halbkreisförmige Lagerschale 5a auf, was insbesondere die Figuren 4 und 5 anschaulich zeigen.

Der etwa halbkreisförmigen Lagerschale 5a gegenüberliegend ist der Lagerkörper 5 mit Lagerabschnitten 5b ausgestattet, welche einen Lagerbolzen 2 in der endgültigen Montageposition der Gesamtanordnung innerhalb der Lagerschale 5a halten und fixieren. Dies zeigt beispielsweise die Figur 3 sehr deutlich.

Die Lagerlasche 4 ist, was die Figuren 4 und 5 wiederum in besonderer Deutlichkeit zeigen, mit einem Einschnitt 4a ausgestattet, der zu seinem freien, offenen Ende hin V-förmig erweitert und in diesem Bereich mit Rastkerben 4b versehen ist.

Der Lagerkörper 5, der in an sich bekannter und deshalb nicht näher dargestellter Weise an zwei gegenüberliegenden Seiten mit der Dicke der Lagerlasche 4 entsprechenden Nuten versehen ist, kann in den Ausschnitt 4a der Lagerlasche 4 von der offen Seite des Ausschnittes 4a her gesehen eingeführt werden, wie aus Figur 4 und 5 hervorgeht.

In einer ersten Montageposition, wie sie in Figur 5 dargestellt ist, wird der Lagerkörper 5 gegenüber mindestens einer der Rastkerben 4b in einer Vormontageposition vorläufig fixiert. In dieser vorläufigen Fixierungsstellung ist der Lagerkörper 5 entsprechend dem oberen Bereich des Einschnittes 4a noch V-förmig geöffnet, wie dies Figur 5 deutlich zeigt und wodurch es ermöglicht wird, einen Lagerbolzen 2 behinderungsfrei in den Lagerkörper 5b von oben einzuführen. Liegt der Lagerbolzen 2 im unteren und als Lagerschale 5a ausgebildeten Bereich des Lagerkörpers 5 an, führt ein weiterer Druck nach unten zu einer weiteren Verschiebung des Lagerkörpers 5 ebenfalls nach unten und in die endgültige Montageposition gemäß Figur 3. Bei diesem endgültigen Einschieben des Lagerkörpers 5 in den Einschnitt 4a der Lagerlasche 4 wird der obere Bereich des Lagerkörpers 5 zusammengedrückt, so dass nun die beiden Lagerabschnitte 5b den Lagerbolzen 2 auf der der etwa halbkreisförmigen Lagerschale 5a gegenüberliegenden Seite überdecken und den Lagerbolzen in seiner gewünschten Position fixieren. In der endgültigen Montageposition gemäß Figur 3 ist der Lagerkörper 5 wiederum durch mindestens ein Paar von Rastkerben 4b gegen unbeabsichtigtes Verschieben gesichert.

Soll eine Demontage der Lagerung herbeigeführt werden, besteht die Möglichkeit, die oberen, freien Enden des Lagekörpers 5 entgegen der vorgespannten Aufspreizrichtung zunächst zusammen zu drücken und die Verrastung gegenüber der Lagerlasche 4 aufzuheben. Danach kann der Lagerkörper 5 mit dem darin angeordneten Lagerbolzen 2 gegenüber der Lagerlasche 4 nach oben verschoben werden bis in eine Position, in der der Lagerkörper 5 so weit aufgespreizt werden kann, dass der Lagerbolzen 2 aus dem Lagerkörper 5 herausbewegt werden kann. Das Aufspreizen des Lagerkörpers 5 erfolgt dabei automatisch durch die dem Lagerkörper 5 innewohnende Federkraft. Der Lagerkörper 5 ist, was die Figuren 1 bis 5 deutlich zeigen, als in etwa V-förmiger Bügel hergestellt, welcher beim Einsetzen in die Lagerlasche 4 bzw. in deren Einschnitt 4a in der endgültigen Montageposition eine etwa U-förmige Form einnimmt. Die Verformung des Lagerkörpers 5 aus der entspannten V-förmigen Ausgangsposition bis in die federnd vorgespannte U-förmige Gestaltung in Montageposition ist nur entgegen der Wirkung von entsprechenden Rückstellkräften möglich, die beim Demontieren insofern den Lagerkörper 5 wieder in die Ursprungsform aufspreizen.

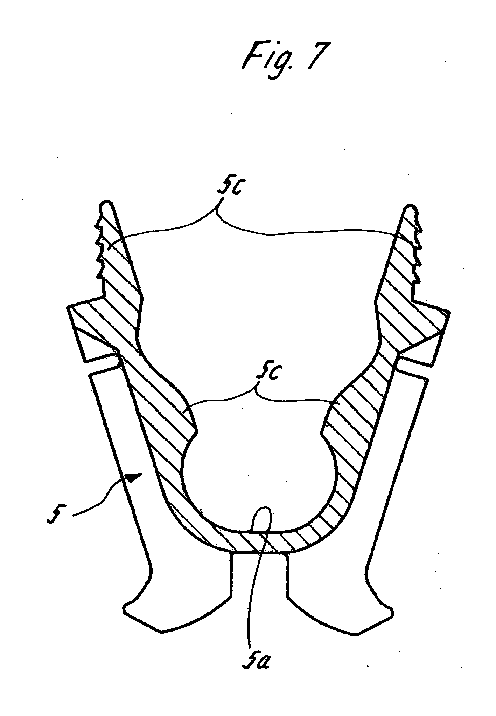

Der in Figur 7 im Schnitt gezeigte Lagerkörper 5 ist an den freien Enden seiner beiden Seitenschenkel mit außenseitig aufgerauten Griffstücken 5c ausgestattet, welche es ermöglichen, die beiden Seitenschenkel auch von Hand zu ergreifen und zum Zwecke einer erforderlich werdenden Demontage noch stärker zusammen zu drücken, um somit die Verrastung des Lagerkörpers 5 gegenüber der Lagerlasche 4 aufzuheben. Somit kann eine notwendige Demontage unter Umständen sogar vollkommen ohne Zuhilfenahme von Werkzeugen durchgeführt werden.

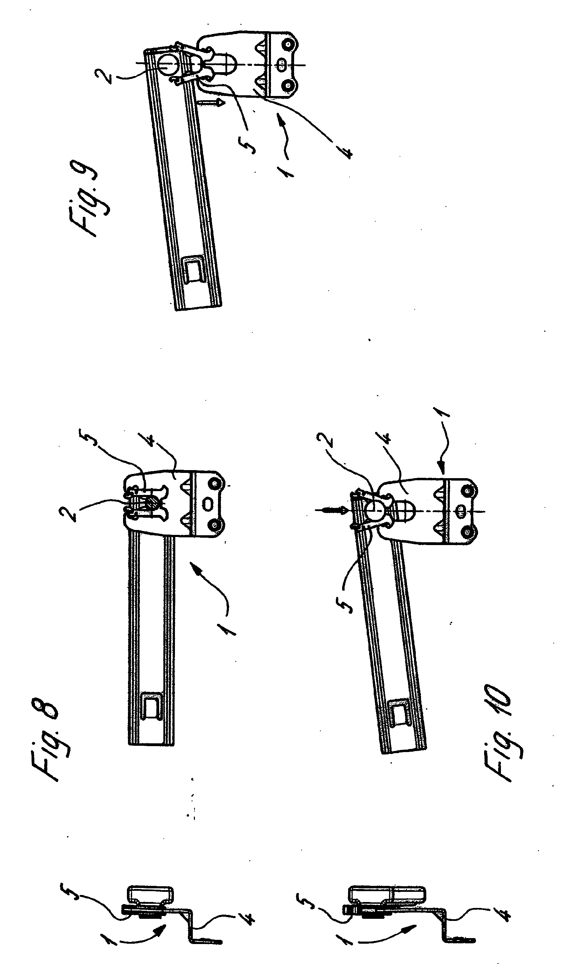

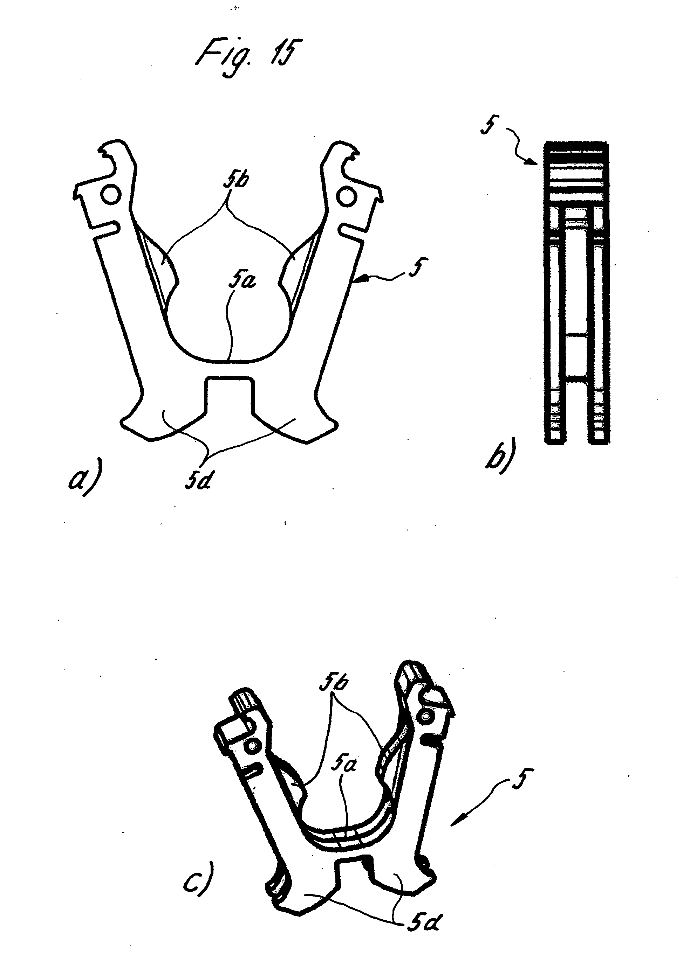

Die Figuren 8 bis 15 zeigen ein Ausführungsbeispiel der Erfindung, welches in seinem Grundkonzept und in seiner Funktion identisch ist mit dem Ausführungsbeispiel der Erfindung nach den Figuren 1 bis 7.

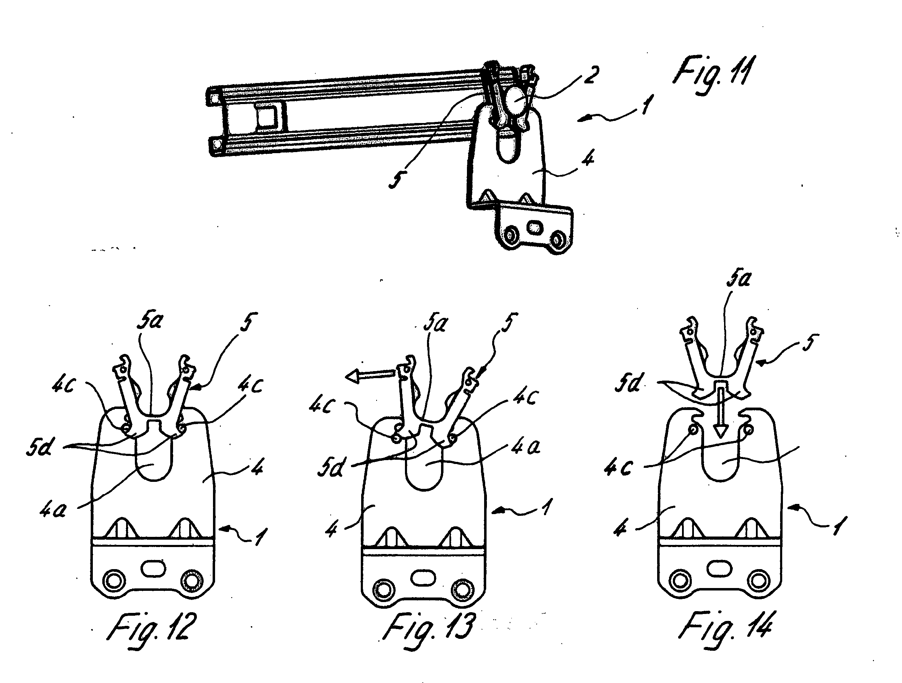

Abweichend ist hier lediglich, dass der Lagerkörper 5 in einer Vormontageposition, gezeigt in Figur 12 gegenüber der Lagerlasche 4 fixiert ist durch an der Lagerlasche 4 angebrachte Haltestifte 4c, welche in der besagten Vormontageposition hintergriffen werden von Rastvorsprüngen 5d des Lagerkörpers 5. In der besagten Vormontageposition gemäß Figur 12 kann ein Lagerbolzen 2 bequem in eine Vormontageposition in den Lagerkörper 5 eingeführt werden, der dann gemeinsam mit dem Lagerbolzen 2 vollständig in den Einschnitt 4a der Lagerlasche 4 eingeschoben wird. In dieser endgültigen Montageposition, zu sehen in Figur 8, kann dann der Lagerkörper wiederum gegen unbeabsichtigtes Verschieben gegenüber der Lagerlasche 4 gesichert sein durch eine Verrastung des Lagerkörpers 5 gegenüber der Lagerlasche 4.

Auch beim Ausführungsbeispiel der Erfindung nach den Figuren 8 bis 15 ist der Lagerkörper 5 aus einem federfähigen Kunststoff gefertigt, während die Lagerlasche 4 bevorzugt aus einem Metall, gegebenenfalls aber auch aus einem entsprechend stabilen Kunststoff gefertigt sein kann.

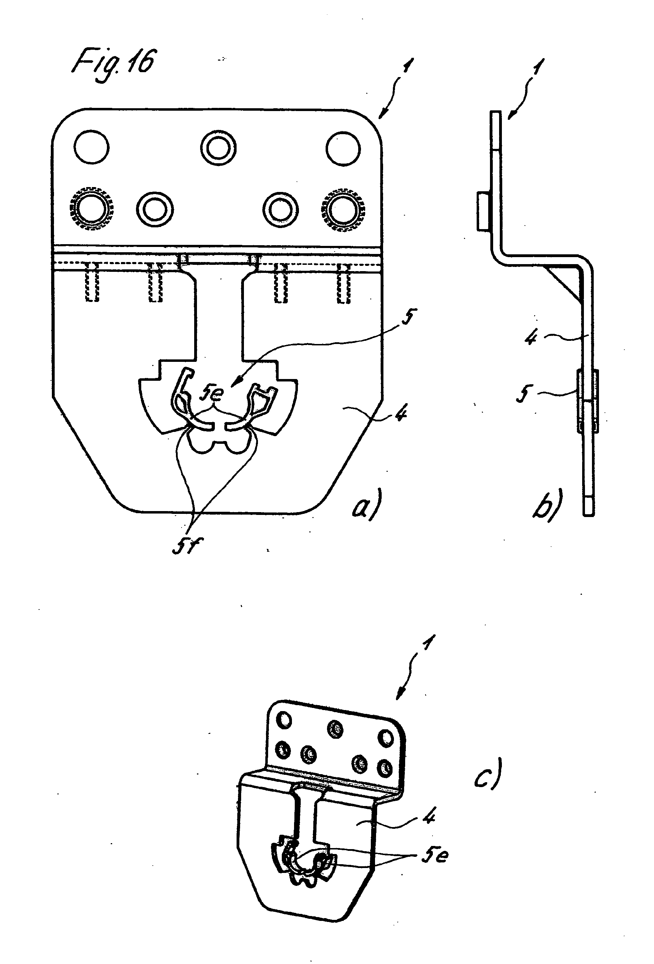

In den Figuren 16 bis 19 ist ein Ausführungsbeispiel der Erfindung dargestellt, welches sich grundlegend von den vorher gezeigten und beschriebenen Ausführungsbeispielen unterscheidet.

Hier ist die Lagerlasche 4 mit dem Lagerkörper 5 einstückig aus Kunststoff hergestellt.

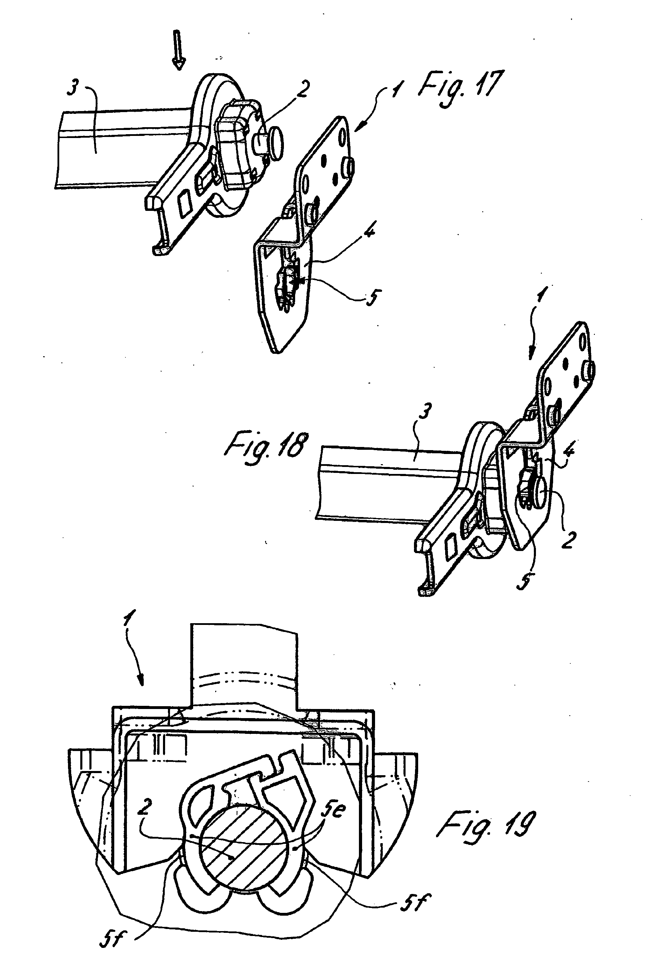

Der Lagerkörper 5 besteht aus zwei Halbschalen 5e, welche über Filmscharniere 5f beweglich mit dem übrigen Bereich der Lagerlasche 4 verbunden sind. Die Lagerschalen 5e können um die Filmscharniere 5f gelenkigartig aufeinander zu oder auseinander geschwenkt werden, wobei eine kräftemäßig unbelastete Vormontagestellung, wie in Figur 16a gezeigt, die Ausgangsposition bildet. Wird ein Lagerbolzen in den Lagerkörper 5 eingebracht und nach unten gedrückt, kippen die beiden Lagerschalen 5e um ihre Filmscharniere 5f aufeinander zu und umschließen den Lagerbolzen 2, so wie in Figur 19 deutlich gezeigt. Dabei sind die jeweils freien Enden der beiden Halbschalen 5e formschlüssig miteinander verrastet, so dass ein unbeabsichtigtes Öffnen der Lagerstelle verhindert ist. Dabei ist eine der Lagerschalen 5e mit einer Hinterschneidung und die andere Lagerschale 5e mit einem Rastzahn ausgestattet, die in der geschlossenen Position formschlüssig ineinander greifen.

Um eine Demontage dieser Lagerstelle herbeizuführen, ist es zunächst erforderlich, die beiden Halbschalen 5e so weit zusammenzudrücken, dass die Verrastung zwischen diesen beiden aufgehoben ist, anschließend wird durch die dem System innewohnenden Rückstellkräfte eine Auseinanderspreizung der beiden Lagerschalen 5e in Öffnungsposition erfolgen, also in die Position gemäß Figur 16a. Der Lagerbolzen 2 kann nun bequem aus der Lagerstelle herausgenommen werden.

Beim Ausführungsbeispiel der Erfindung nach den Figuren 16 bis 19 ist es zweckmäßig, Lagerlasche 4 und Lagerkörper 5 insgesamt einstückig aus Kunststoff zu fertigen. Es dürfte aber auch denkbar sein, die Lagerlasche 4 nach wie vor aus Metall herzustellen und die beiden Halbschalen 5e des Lagerkörpers 5 an diese Lagerlasche 4 derart anzuspritzen, dass wiederum Filmscharniere 5f zur kippbeweglichen Lagerung der beiden Halbschalen 5e gebildet sind.

Auch beim Ausführungsbeispiel der Erfindung nach Figuren 16 bis 19 ist eine werkzeuglose Montage wie auch Demontage eines Lagerbolzens 2 in der Lager- und Halteeinrichtung möglich.

## Patentansprüche

1. Lager- und Halteeinrichtung (1) zur Aufnahme und Lagerung eines Lagerbolzens (2) einer Lagerwelle (3), wobei die Einrichtung (1) eine ortsfest montierbare Lagerlasche (4) und einen Lagerkörper (5) mit einer etwa halbkreisförmigen Lagerschale (5a) und mit der Lagerschale (5a) gegenüberliegenden und einen Lagerbolzen (2) in der Lagerschale (5a) haltenden Lagerabschnitten (5b) aufweist und der Lagerbolzen (2) radial in den Lagerkörper (5) einklipsbar ist,
**dadurch gekennzeichnet, dass** die den Lagerbolzen (2) haltenden Lagerabschnitte (5b) bei eingeklipstem Lagerbolzen (2) entgegen der Wirkung von in Aufspreizrichtung gerichteten Federkräften in ihrer Halteposition fixiert sind,
wobei die Lagerlasche (4) und der Lagerkörper (5) als separate Bauteile ausgebildet sind und der Lagerkörper (5) aus einem federelastischen Kunststoff gefertigt und als ein im nicht montierten Zustand im Wesentlichen V-förmig ausgebildeter Bügel vorgeformt ist, der in einen Einschnitt (4a) der Lagerlasche (4) einschiebbar und dabei bezüglich seiner beiden Seitenschenkel zu einer annähernd U-förmigen Form zusammendrückbar ist und dass der Lagerkörper (5) sowohl in einer Vormontageposition, innerhalb der ein Lagerbolzen (2) radial in den Lagerkörper (5) einführbar ist, wie auch in einer endgültigen Montageposition, innerhalb derer der Lagerbolzen (2) radial gesichert ist, gegenüber der Lagerlasche (4) verrastbar oder anderweitig gegen unbeabsichtigtes Verschieben gesichert ist.

2. Lager- und Halteeinrichtung nach Anspruch 1, **dadurch gekennzeichnet, dass** der Lagerkörper (5) an den freien Enden seiner beiden Schenkel mit Griffstücken (5c) ausgestattet ist.

3. Lager- und Halteeinrichtung nach Anspruch 2, **dadurch gekennzeichnet, dass** die Griffstücke (5c) an ihren einander abgewandt liegenden Außenseiten mit Aufrauungen versehen sind.

4. Lager- und Halteeinrichtung nach einem der vorhergehenden Ansprüche, **dadurch gekennzeichnet, dass** die Lagerlasche (4) mit einer oder mehreren Rastausnehmungen (4b) zur Verrastung des Lagerkörpers (5) sowohl in einer Vormontage- wie auch in einer Endmontageposition versehen ist.

5. Lager- und Halteeinrichtung nach einem der vorhergehenden Ansprüche, **dadurch gekennzeichnet, dass** die Lagerlasche (4) mit angeformten oder zusätzlich angebrachten Haltebolzen (4c) und der Lagerkörper (5) mit Rastzähnen (5d) versehen ist, wobei die Rastzähne (5d) die Haltebolzen (4c) der Lagerlasche (4) in einer Vormontageposition des Lagerkörpers (5) hintergreifen.

6. Lager- und Halteeinrichtung nach Anspruch 1, **dadurch gekennzeichnet, dass** die Lagerlasche (4) und der Lagerkörper (5) einstückig oder fest miteinander verbunden sind, wobei der Lagerkörper (5) aus zwei Lagerschalen (5e) besteht, die um Filmscharniere (5f) in eine Montageposition aufeinander zu bewegbar und miteinander verrastbar sind.

7. Lager- und Halteeinrichtung nach Anspruch 6, **dadurch gekennzeichnet, dass** die Lagerschalen (5e) und die Lagerlasche (4) einstückig aus einem Kunststoff hergestellt sind.

8. Lager- und Halteeinrichtung nach Anspruch 6, **dadurch gekennzeichnet, dass** die Lagerlasche (4) aus Metall und die Lagerschalen (5e) aus Kunststoff gefertigt und durch formschlüssiges Umspritzen mit der Lagerlasche (4) im übrigen fest verbunden sind.

## Claims

1. Bearing and holding device (1) for receiving and holding a bearing bolt (2) of a bearing shaft (3), wherein the device (1) has a bearing tab (4) fittable in a positionally fixed manner and a bearing body (5) with an approximately semicircular bearing shell (5a) and with bearing sections (5d) which lie opposite the bearing shell (5a) and hold a bearing bolt (2) in the bearing shell (5a), and the bearing bolt (2) can be clipped radially into the bearing body (5),
**characterized in that,** when the bearing bolt (2) is clipped in, the bearing sections (5b) which hold the bearing bolt (2) are fixed in the holding position thereof counter to the effect of spring forces directed in the expanding direction, the bearing tab (4) and the bearing body (5) being designed as separate components, and the bearing body (5) being manufactured from a flexible plastic and being preshaped in the form of a bracket which is of substantially V-shaped design in the non-fitted state, can be pushed into an incision (4a) in the bearing tab (4) and, in the process, the two side limbs thereof can be pressed together approximately into a U shape, and **in that** the bearing body (5) is latchable in relation to the bearing tab (4) or is secured in some other way against unintentional displacement both in a preinstallation position, within which a bearing bolt (2) is insertible radially into the bearing body (5), and in a final installation position, within which the bearing bolt (2) is secured radially.

2. Bearing and holding device according to Claim 1, **characterized in that** the bearing body (5) is provided with handle pieces (5c) at the free ends of both of the limbs thereof.

3. Bearing and holding device according to Claim 2, **characterized in that** the handle pieces (5c) are provided with roughened portions on the mutually remote outer sides thereof.

4. Bearing and holding device according to one of the preceding claims, **characterized in that** the bearing tab (4) is provided with one or more latching recesses (4b) for latching the bearing body (5) both in a preinstallation position and in a final installation position.

5. Bearing and holding device according to one of the preceding claims, **characterized in that** the bearing tab (4) is provided with integrally formed or additionally attached holding bolts (4c) and the bearing body (5) is provided with latching teeth (5d), the latching teeth (5d) engaging behind the bearing bolts (4c) of the bearing tab (4) in a preinstallation position of the bearing body (5).

6. Bearing and holding device according to Claim 1, **characterized in that** the bearing tab (4) and the bearing body (5) are connected as a single piece or fixedly to each other, the bearing body (5) comprising two bearing shells (5e) which are movable towards each other about film hinges (5f) into an installation position and are latchable to each other.

7. Bearing and holding device according to Claim 6, **characterized in that** the bearing shells (5e) and the bearing tab (4) are produced as a single piece from a plastic.

8. Bearing and holding device according to Claim 6, **characterized in that** the bearing tab (4) is manufactured from metal and the bearing shells (5e) are manufactured from plastic and are furthermore connected fixedly to the bearing tab (4) by interlocking insert moulding.

## Revendications

1. Dispositif de support et de retenue (1), destiné à recevoir et supporter un boulon (2) d'un arbre de palier (3), ledit dispositif (1) comportant une patte de palier (4), apte à être montée de manière stationnaire, et un corps de palier (5) avec un coussinet (5a) sensiblement semi-circulaire et avec des parties de palier (5b), situées en face du coussinet (5a) et retenant un boulon (2) dans le coussinet (5a), et le boulon (2) pouvant être encliqueté radialement dans le corps de palier (5), **caractérisé en ce que,** lorsque le boulon (2) est encliqueté, les parties de palier (5b), qui retiennent le boulon (2), sont immobilisées dans leur position de retenue à l'encontre de l'effet des forces de ressort orientées dans le sens d'un écartement, la patte de palier (4) et le corps de palier (5) étant réalisés sous forme d'éléments séparés, et le corps de palier (5) étant réalisé dans une matière plastique élastiquement flexible et étant façonné préalablement sous la forme d'un étrier, qui est conçu sensiblement en forme de V à l'état non monté et qui peut être inséré dans une encoche (4a) de la patte de palier (4) et, à cette occasion, être comprimé au niveau de ses branches latérales pour obtenir une forme sensiblement en U, et **en ce que** le corps de palier (5) dans une position de montage préliminaire, dans laquelle un boulon (2) peut être introduit radialement dans le corps de palier (5), de même que dans une position de montage final, dans laquelle le boulon (2) est immobilisé radialement, peut être bloqué par rapport à la patte de palier (4) ou peut être immobilisé d'une autre manière pour empêcher tout déplacement involontaire.

2. Dispositif de support et de retenue selon la revendication 1, **caractérisé en ce que** le corps de palier (5) comporte des parties de préhension (5c) au niveau des extrémités libres de ses deux branches.

3. Dispositif de support et de retenue selon la revendication 2, **caractérisé en ce que** les parties de préhension (5c) comportent des rugosités sur leurs faces extérieures détournées l'une de l'autre.

4. Dispositif de support et de retenue selon l'une quelconque des revendications précédentes, **caractérisé en ce que** la patte de palier (4) est munie d'un ou de plusieurs évidements de blocage (4b) pour bloquer le corps de palier (5) tant dans une position de montage préliminaire que dans une position de montage final.

5. Dispositif de support et de retenue selon l'une quelconque des revendications précédentes, **caractérisé en ce que** la patte de palier (4) comporte des boulons de fixation (4c), formés contre ladite patte de palier ou attachés en plus à celle-ci, et le corps de palier (5) comporte des dents de blocage (5d), lesdites dents de blocage (5d) enserrant par derrière les boulons de fixation (4c) de la patte de palier (4) lorsque le corps de palier (5) est dans une position de montage préliminaire.

6. Dispositif de support et de retenue selon la revendication 1, **caractérisé en ce que** la patte de palier (4) et le corps de palier (5) sont réalisés d'un seul tenant ou sont assemblés de manière ferme l'un à l'autre, ledit corps de palier (5) étant formé de deux coussinets (5e) qui, dans une position de montage, peuvent être déplacés l'un vers l'autre via des charnières flexibles (5f) et peuvent être bloqués l'un avec l'autre.

7. Dispositif de support et de retenue selon la revendication 6, **caractérisé en ce que** les coussinets (5e) et la patte de palier (4) sont réalisés d'un seul tenant dans une matière plastique.

8. Dispositif de support et de retenue selon la revendication 6, **caractérisé en ce que** la patte de palier (4) est réalisée en métal et les coussinets (5e) sont réalisés en matière plastique et sont reliés fermement, par ailleurs, à la patte de palier (4) sous l'effet d'un surmoulage par conjugaison de forme.
